# EUROPÄISCHE PATENTANMELDUNG

(11) **EP 0 680 709 A1**
(43) Veröffentlichungstag der Anmeldung: **08.11.1995**
(21) Anmeldenummer: 94107094.8
(22) Anmeldetag: 06.05.1994
(51) Int. Cl.: A47B 7/00, A47B 13/02, A47B 13/04, F16B 12/18

(54) **Tisch**

(71) Anmelder: Jung, Karl-Heinz, D-72525 Münsingen-Dottingen (DE)
(72) Erfinder: Jung, Karl-Heinz, D-72525 Münsingen-Dottingen (DE)
(74) Vertreter: Flaig, Siegfried, Dipl.-Ing.

(57) **Zusammenfassung**

Bei einem Tisch liegt eine Tischplatte (1) auf einem stützenden Untergestell (2), das mehrere Stützstellen (3,4) bildet, wobei das Untergestell (2) aus zumindest zwei oder mehreren, die Tischplatte (1) stützenden, auf Schmalkanten (5) aufstehenden wandähnlichen Platten gebildet ist.
Um die Vielzahl der Montageteile für ein Tisch-Untergestell (2) und den Aufwand an Montage zu senken, d.h. ein solches Untergestell (2) kostengünstiger und schneller unter industriellen Serienbedingungen herstellen zu können, wird vorgeschlagen, daß die ausschließlich ebenen wandähnlichen Platten (6) eine berührungsfreie Lage einnehmen und durch zumindest zwei mit ihren Achsen (7a) quer bzw. schräg durch die wandähnlichen Platten (6) hindurch verlaufenden Stäbe (7a) fixiert sind.

## Beschreibung

Die Erfindung betrifft einen Tisch mit einer Tischplatte und einem die Tischplatte stützenden Untergestell, das mehrere Stützstellen bildet, wobei das Untergestell aus zumindest zwei oder mehreren die Tischplatte stützenden, auf Schmalkanten aufstehenden wandähnlichen Platten gebildet ist. Ein solcher Tisch ist aus der DE - 19 73 558 U1 bekannt. Die bekannte Lösung entbehrt jedoch jeglicher wirtschaftlicher und serieller Herstellungsbedingungen bei entsprechender Stilrichtung.

Ein anderer bekannter Vorschlag (DE - 84 24 143.8 U1) besitzt ziemlich ähnliche Nachteile und kann die gewünschten Anforderungen daher ebenfalls nicht erfüllen.

Es ist ferner bekannt, einen Eßtisch, einen Couch-Tisch u.dgl. aus einer Tischplatte und daran befestigten Tischbeinen zu gestalten. So werden Tischbeine z.B. an der Innenseite einer unter der Tischplatte verlaufenden zur Tischplattenunterseite winkligen Umrandung gegen in den Ecken eingesetzten Winkelblöcke verschraubt. Damit sind entsprechend der Anzahl Tischplatten-Ecken auch nur vier Tischbeine möglich.
Unter den vielen weiteren bekannten Lösungen für die Ausbildung eines Untergestells ist außerdem noch eine Bauweise zu erwähnen, bei der an den Enden der Tischplatte wandartige, zwei Eckbereiche jeweils verbindende Ständer befestigt sind.

Derartige Untergestelle für Tische bzw. Tischplatten werden jeweils nach ihrem Zweck oder ihrer Verwendung, jedoch auch nach ihrem Stil ausgebildet. Zu einer bestimmten Stilrichtung gehört daher eine passende Untergestell-Ausbildung.
Allen derartigen Untergestell-Ausbildungen ist der Nachteil gemeinsam, eine äußerst aufwendige, durch sehr viele Einzelteile geprägte Konstruktion zu erfordern, so daß hohe Kosten für das Material und hohe Kosten für die Montage entstehen. Eine industrielle Serienfertigung wird im übrigen durch diese Bauweisen gehemmt.

Der im Anspruch 1 angegebenen Erfindung liegt das Problem zugrunde, die Vielzahl der Montageteile für ein Tisch-Untergestell und den Aufwand an Montage zu senken, d.h. ein solches Untergestell kostengünstiger und schneller, ggfs. unter industriellen Serienbedingungen herstellen zu können.

Die gestellte Aufgabe wird erfindungsgemäß dadurch gelöst, daß die ausschließlich ebenen wandähnlichen Platten eine berührungsfreie Lage einnehmen und durch zumindest zwei mit ihren Achsen quer bzw.schräg durch die wandähnlichen Platten hindurch verlaufenden Stäbe fixiert sind.
Die mit der Erfindung erzielten Vorteile bestehen insbesondere darin, daß ohne Außerachtlassung der Möglichkeit einer auszuwählenden Stilrichtung ein Tisch-Untergestell mit geringstem Aufwand an Teilen, mit geringsten Herstellkosten der notwendigen Produktions-Vorrichtungen und mit geringstmöglichem Montageaufwand geschaffen werden kann. Das erfindungsgemäße Prinzip erlaubt zudem eine hohe Belastbarkeit und gewährleistet eine hohe Standsicherheit überall dort, wo eine hohe Belastung gefordert wird.
Weitere Vorteile sind, daß keine teuren Verschraubungen notwendig sind, jedoch eine lösbare Verbindung erzielt wird. Die Einfachheit der Verbindung bewirkt hierbei einen gestalterischen Vorzug. So können die wandähnlichen Platten in gewünschte Winkelstellungen zueinander gebracht werden.

Eine vorteilhafte Ausgestaltung der Erfindung ist im Anspruch 2 angegeben. Die Weiterbildung nach Anspruch 2 sieht vor, daß die Stäbe aus transparentem Werkstoff bestehen. Somit kann bei Wahl einer transparenten, z.B. gläsernen Tischplatte der Eindruck eines gläsernen Tisches vollkommen zutreffend erweckt werden. Je nach Wahl des Werkstoffes für die Stäbe können diese auch als als Ziermittel eingesetzt werden.

Vorteilhaft ist auch, daß die Stäbe aus Metall bestehen können, so daß bei hoher Festigkeit von Metall der Stab dünn oder dünnwandig (bei einem Rohr) sein kann. Die Stäbe können auch aus jedem Profilquerschnitt bestehen. Geeignete Bohrungen können über Lasertechnik hergestellt werden.

Ein streng geometrischer Eindruck kann außerdem dadurch hervorgerufen werden, daß mehrere ausschließlich ebene, wandähnliche Platten zueinander parallel verlaufend angeordnet sind und der Block der Platten zu der Tischplatte ausgerichtet ist.

Weitere Alternativen, den technischen Hintergrund der Bauweise zu korrigieren, ergeben sich daraus, daß die ausschließlich ebenen, wandähnlichen Platten einen rechteckigen oder polygonalen Umriß aufweisen. Gleichzeitig kann dadurch der unter der Tischplatte benötigte Raum entsprechend geschaffen werden.

Eine ohne jedes weitere Hilfsmittel sich ergebende Starrheit (statische Bestimmtheit) des Systems wird dadurch erzielt, daß die Stäbe gegenüber der Außenfläche der Platten unter einem Winkel zur Horizontalen bzw. unter einem Winkel zur Vertikalen verlaufen.

Für die Montage ist es besonders vorteilhaft, weil sehr einfach, daß die Stäbe einteilig sind und durch auf einer gemeinsamen Stabachse verlaufende Bohrungen verschiedener Platten hindurch satt eingeschoben und ohne jedes weitere Befestigungsmittel mit den Platten verbunden sind.

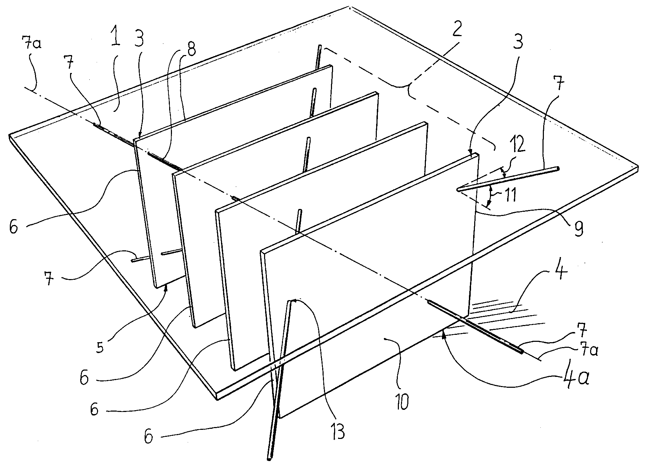

Ein Ausführungsbeispiel der Erfindung ist in der Zeichnung dargestellt und wird im folgenden näher beschrieben.
Die einzige Figur der Zeichnung stellt eine perspektivische Ansicht des Tisches dar.

Der Tisch weist eine Tischplatte 1 auf mit einem Untergestell 2. Die Tischplatte 1 kann entweder nur auf das Untergestell 2 lose durch seine Gewichtskraft "befestigt" aufgelegt sein oder aber mittels einfachen Befestigungsverfahren wie z.B. Kleben, Gießen oder Spritzen (von Kunststoffen) eine Verbindung bilden. Zwischen der Tischplatte 1 und dem Untergestell 2 bestehen Stützstellen 3 ebenso wie zwischen dem Untergestell 2 und dem Fußboden 4 solche Stützstellen 4a.

Das Untergestell 2 ist nunmehr mit auf Schmalkanten 5 aufstehenden wandähnlichen Platten gebildet, die mittels quer oder schräg schräg zu den Platten 6 und unter sich verlaufenden Stäben 7 gegegeneinander festgelegt sind. Die Stabachsen 7a zweier Stäbe 7 verlaufen nicht parallel zueinander, wobei eine solche Nichtparallelität schon durch einen gewollten oder ungewollten Fertigungsfehler entstehen kann, so daß schon geringste Winkelabweichungen ausreichen, um eine Fixierung innerhalb des gebildeten Blocks 8 aus Platten 6 und z.B. zwei bis drei Stäben 7 zu gewährleisten. Für ein gewünschtes Design können die wandähnlichen Platten 6 aus transparentem Werkstoff bestehen, sowie auch, wenn deren Festigkeit nicht in Frage steht, die Stäbe 7. Für höhere Beanspruchungen bestehen die Stäbe 7 aus Metall oder Metallrohr. Im Ausführungsbeispiel sind mehrere wandähnliche Platten 6 zueinander parallel verlaufend angeordnet und der Block 8 der Platten 6 ist rechtwinklig zu der Tischplatte 1 ausgerichtet.

Die wandähnlichen Platten können aus Kostengründen auch durch einen rechteckigen oder polygonalen Umriß 9 aufweisen und müssen lediglich an der Stelle der Stäbe 7 an ihrer Außenfläche 10 einen Werkstoffbereich aufweisen, der es erlaubt, einen Winkel 11 zur Horizontalen und/oder einen Winkel 12 zur Vertikalen einzuhalten, um durch den Werkstoff Bohrungen 13 zu schaffen, die ein sattes Einschieben der Stäbe 7 gestatten.

## Patentansprüche

1. Tisch mit einer Tischplatte und einem die Tischplatte stützenden Untergestell, das mehrere Stützstellen bildet, wobei das Untergestell aus zumindest zwei oder mehreren die Tischplatte stützenden, auf Schmalkanten aufstehenden wandähnlichen Platten gebildet ist,
dadurch gekennzeichnet,
daß die ausschließlich ebenen wandähnlichen Platten (6) eine berührungsfreie Lage einnehmen und durch zumindest zwei mit ihren Achsen (7a) quer bzw. schräg durch die wandähnlichen Platten (6) hindurch verlaufenden Stäbe (7a) fixiert sind.

2. Tisch nach Anspruch 1,
dadurch gekennzeichnet,
daß die Stäbe (7) aus transparentem Werkstoff bestehen.

3. Tisch nach Anspruch 1 ,
dadurch gekennzeichnet,
daß die Stäbe (7) aus Metall bestehen.

4. Tisch nach einem der Ansprüche 1 bis 3,
dadurch gekennzeichnet,
daß mehrere ausschließlich ebene wandähnliche Platten (6) zueinander parallel verlaufend angeordnet sind und der Block (8) der Platten (6) zu der Tischplatte (1) ausgerichtet ist.

5. Tisch nach einem der Ansprüche 1 bis 4,
dadurch gekennzeichnet,
daß die ausschließlich ebenen wandähnlichen Platten (6) einen rechteckigen oder polygonalen Umriß (9) aufweisen.

6. Tisch nach einem der Ansprüche 1 bis 5,
dadurch gekennzeichnet,
daß die Stäbe (7) gegenüber der Außenfläche (10) der Platten (6) unter einem Winkel (11) zur Horizontalen bzw. unter einem Winkel (12) zur Vertikalen verlaufen.

7. Tisch nach einem der Ansprüche 1 bis 6,
dadurch gekennzeichnet,
daß die Stäbe (7) einteilig sind und durch auf einer gemeinsamen Stabachse (7a) verlaufende Bohrungen (13) verschiedener Platten (6) hindurch satt eingeschoben und ohne jedes weitere Befestigungsmittel mit den Platten (6) verbunden sind.
